# EUROPEAN PATENT SPECIFICATION

(11) **EP 1 755 267 B1**
(45) Date of publication and mention of the grant of the patent: **15.10.2008**
(21) Application number: 05291673.1
(22) Date of filing: 04.08.2005
(51) Int. Cl.: H04L 9/00

(54) **Process, device and computer program for data decryption**
Verfahren, Vorrichtung und Computerprogramm zur Datenentschlüsselung
Procédé, dispositif et logiciel de déchiffrement de données

(43) Date of publication of application: 21.02.2007
(73) Proprietor: Dibcom, 91120 Palaiseau (FR)
(72) Inventor: Laury, Cyril, 92160 Antony (FR); De Marchi, Stéphane, 75015 Paris (FR)
(74) Representative: Loisel, Bertrand

(56) References cited:
- EP-A- 1 115 094
- US-A1- 2004 186 979

## Description

The present invention concerns the decryption of encrypted data using a host-processor and a co-processor.

As decryption operations are consuming computation resources, the host-processor generally transmits the entire sets of encrypted data to a dedicated processor, also called co-processor, to achieve the decryption operations. Usually the host-processor also transmits required decryption keys.

Such decryption is widely used for the reception of television programs in which the programs are encrypted and the user is provided with a key which permits their decryption.

Although the host-processor and co-processor are both designed to protect the key stored within them for any steal attempts, either physically by sealing the co-processor hardware in metal cases with breach or intrusion sensors for example, or logically by using specific software to communicate keys to the co-processor, the linked between the host-processor and the co-processor can be spied.

Eventually, both the entire set of encrypted data and the entire set of decrypted data are transferred on the link between the host-processor and the co-processor.

Thus, by spying this link it is possible to retrieve directly the entire set of decrypted data. Also by analyzing the encrypted and the decrypted data it is possible to retrieve the used keys. Accordingly, there is a need for improving the security of the decryption achieved by using a host-processor and a co-processor.

Some known systems, such as those described in documents US 2004/186979 and EP 1 115 094, increase the security of the decryption by use of several processors, in parallel or in a redundant manner.

The invention relates to a method for decrypting data as recited in claim 1, a corresponding device and program as recited in claims 10 and 11.

Thanks to the segmentation of the set of encrypted data prior to its decryption and to the decryption of some segments by the host-processor, neither the entire set of encrypted data nor the entire set of decrypted data is transmitted on the link between the host-processor and the co-processor. This results in a higher security.

Other features and advantage of the invention will be apparent from the description, the claims and the drawings in which:
- figure 1 is a block diagram of a decrypting unit achieving the method according to the invention;
- figure 2A is a diagram of the method according to the invention;
- figure 2B represents the data during the method of fig.2A.

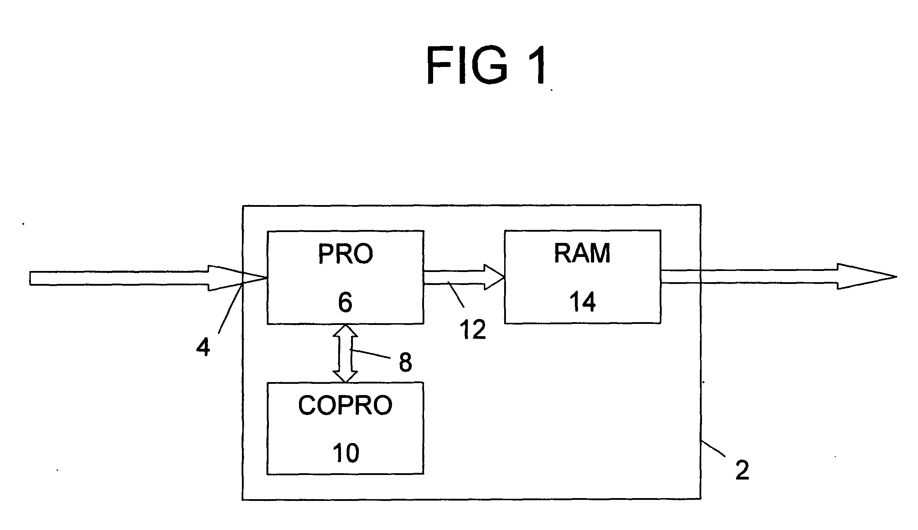

In the example represented on figure 1, a decrypting unit is part of a set up box adapted to receive signals of digital television, some of which are encrypted.

The decrypting unit 2 has a data input 4 through which sets of encrypted data are provided to a host-processor 6. This host-processor 6 is connected through a bi-directional bus 8 to a co-processor 10 and, through another bi-directional bus 12, to a memory 14 as for example a RAM memory. RAM stands for random access memory in English.

In the described example, the host-processor 6 is the central processor of the set up box and the co-processor 10 is a dedicated co-processor with fast computing features especially adapted for decryption.

The link 12 between the host-processor 6 and the RAM memory 14 is a protected link. For example, the RAM 14 is built on the same chip as the host-processor 6.

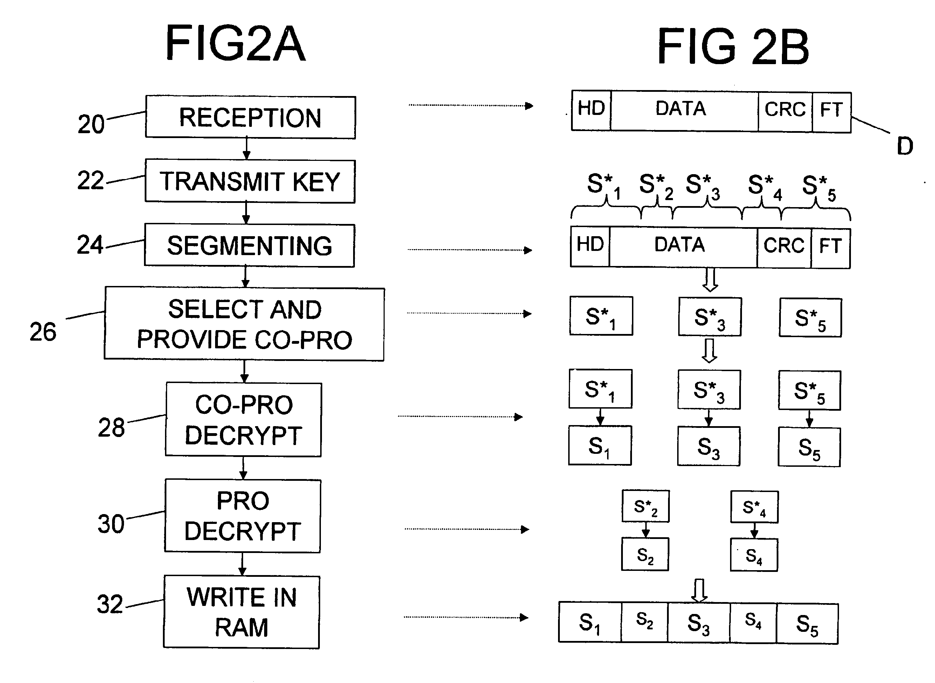

The behaving of this unit will now be described with reference to figures 2A and 2B.

The method of decryption is initiated by the reception in a step 20 of a set of encrypted data by host-processor 6 through the input port 4.

In the example, the set of encrypted data is a data packet designated by the reference D on figure 2B.

A data packet is a coherent group of data with a determined pattern comprising several fields corresponding to several types of data. For example, the data packet comprises a field of raw data and also fields for service data such as header HD, footer FT, error correction code CRC or the like.

Step 20 is followed by a step 22 of transmission of a decryption key by the host-processor 6 to the co-processor 10. This transmission is achieved in conventional way through secure links which are not represented.

The method then comprises a step 24 of segmenting the set of encrypted data D in segments by the host-processor 6. These segments of encrypted data are represented on figure 2A under the references S*₁ to S*₅.

Advantageously, step 24 comprises analyzing the pattern of the set of encrypted data to form the segments, without decrypting the data. For example, segments are determined in such a way that some fields of service data, such as the CRC field, are spread over several segments.

Advantageously, some segments, such as segments, S*₂ and S*₄, are of smaller size than the others segments S*₁, S*₃ and S*₅.

At step 26, a first part of the segments of the set is provided to the co-processor 10 by the host-processor 6 through the bi-directional bus 8.

Advantageously, step 26 of providing the segments to the co-processor comprises selecting said segments to form the first part according to determined criterion.

For example, the segments transmitted to the co-processor 10 are selected as a function of their size, the bigger segments being selected, of their position, only no consecutive segments being selected or of their content, segments containing critical fields not being selected. Other criterion and combinations thereof can be used to select the segments that are included in the first part to be provided to the co-processor 10.

In the described embodiment, the bigger and no-consecutive segments, such as segments S*₁, S*₃ and S*₅, are selected to form the first part.

The method then comprises a step 28 of decrypting said first part of the segments by the co-processor 10, thus achieving hardware decryption of segments S*₁, S*₃ and S*₅ to deliver segments S₁, S₃ and S₅ of decrypted data.

Advantageously, more than 50 % of the encrypted data are decrypted by the co-processor 10.

The method then comprises a step 30 in which is achieved decryption of a second part of the segments from the set by the host-processor 6. In the example, this second part comprises every segment that was not selected in the first part and the segments to be decrypted by the host-processor are the smallest ones in size so that decryption does not require too much computation time. More precisely, segments S*₂ and S*₄ are decrypted in step 30 by the host-processor by use of adapted software to deliver segments S₂ and S₄. This decryption is called software decryption.

In the embodiment described, the method then comprises the transmission of the decrypted segments S₁, S₃ and S₅ by the co-processor 10 to the host-processor 6 which then memorises them in the RAM 14 together with the decrypted segment S₂ and S₄, in a step 32 of delivering the decrypted data comprising a combination of the decrypted first and second parts.

Thus, the method of the invention prevents the transfer between the host-processor 6 and the co-processor 10 of the entire set of encrypted data or of decrypted data. Accordingly, even by spying the bus 8 it would have been impossible to retrieve the entire set of data or to retrieve the used keys.

Of course, other embodiments of the invention are also possible.

For example, the segmentation of the sets of encrypted data and/or the selection of the segments to be decrypted by the host-processor or the co-processor, is achieved at random.

In another embodiment, the selection of the segments to be decrypted by the co-processor is achieved as a function of the availability of the host-processor and/or the co-processor.

In another embodiment, the memory is a direct random access memory, also called DRAM, into which both the co-processor and the host-processor can write directly the decrypted data in the delivering step.

The method and device of the invention can also be used with any type of data such as IP plackets and video or audio streams.

In one embodiment, only some of the data in a set of data are encrypted. In that case, the segmentation and selection is achieved only on the encrypted data, in order to achieve some decryption in the host-processor and some in the co-processor.

Yet in another embodiment, the host-processor in connected to several co-processors, each of them receiving some segments for decryption, and the host-processor achieving the decryption of some segments that are not transmitted to any co-processor.

The invention can be achieved by use of a decrypting device comprising a host-processor, such as programmable component or a dedicated chip. The host-processor comprises:
- an interface with at least one co-processor
- means for segmenting a set of encrypted data into segments;
- means for providing a first part of the segments from said set to the co-processor;
- means for controlling the co-processor to decrypt said first part of the segments; and
- means for decrypting a second part of the segments from said set.

The method of the invention can also be achieved by a computer program for execution by a host processor of a decryption device, the computer program having instructions to perform the following processing when executed by said host-processor:
- segmenting a set of encrypted data into segments;
- providing a first part of the segments from said set to at least one co-processor;
- controlling said co-processor to decrypt said first part of the segments; and
- decrypt a second part of the segments from said set.

Such a device or host-processor program can be adapted to achieve any of the embodiments described above and can be adapted in any kind of electronic articles such as digital television receiver, computers, laptops, and any other device and the internal components thereof.

## Claims

1. Method for decrypting data using a host-processor (6) and at least one co-processor (10) comprising the steps of :
- providing (20) the host-processor (6) with an encrypted data packet (D);
- segmenting (24) said encrypted data packet into segments by the host-processor (6);
- providing (26) the co-processor (10) with a first part of the segments from said packet;
- decrypting (28) said first part of the segments by the co-processor (10);
- decrypting (30) a second part of the segments from said packet, by the host-processor (6); and
- delivering (32) a decrypted data packet comprising a combination of the decrypted first and second parts.

2. Method according to claim 1, further comprising a step of transmitting the decrypted first part of the segments by the co-processor (10) to the host-processor (6), and wherein the step of delivering comprises memorizing (32) the first and second parts of decrypted segments under control of said host-processor (6).

3. Method according to claim 1, wherein the step of delivering comprises memorizing said first part of the decrypted segments under the control of said co-processor (10) and memorizing said second part of the decrypted segments under control of said host-processor (6).

4. Method according of any of claims 1 to 3, wherein said encrypted data packet comprises a pattern identifying several types of data within the encrypted data packet.

5. Method according to claim 4, wherein said step of segmenting (24) the encrypted data packet comprises analyzing said pattern to form said segments.

6. Method according to any of the claims 1 to 5, wherein said step of providing (26) the co-processor (10) with the first part of the segments comprises selecting said segments to form said first part according to determined criterion.

7. Method according to claim 6, wherein said segments are selected as a function of their size, bigger segments being selected to form said first part.

8. Method according to claim 6, wherein said segments are selected as a function of their position, no consecutive segments being selected to form said first part.

9. Method according to claims 4 and 6 together, wherein said segments are selected as a function of the types of data within the segment, segments containing no critical type of data being selected to form said first part.

10. Decrypting device comprising a host-processor (6) wherein the host-processor (6) comprises :
- an Interface with at least one co-processor (10)
- means for segmenting an encrypted data packet into segments:
- means for providing a first part of the segments from said packet to the co-processor (10);
- means for controlling the co-processor (10) to decrypt said first part of the segments; and
- means for decrypting a second part of the segments from said packet.

11. Computer program for execution by a host processor of a decryption device, the computer program having instructions to cause said host processor to perform the following processing :
- segmenting (24) an encrypted data packet into segments;
- providing (26) a first part of the segments from said packet to at least one co-processor;
- controlling said co-processor to decrypt (28) said first part of the segments; and
- decrypting (30) a second part of the segments from said packet.

## Patentansprüche

1. Verfahren zum Entschlüsseln von Daten unter Verwendung eines Host-Prozessors (6) und mindestens eines Koprozessors (10), mit den folgenden Schritten:
- ein verschlüsseltes Datenpaket (D) wird dem Host-Prozessor (6) zugeführt (20);
- das verschlüsselte Datenpaket wird von dem Host-Prozessor (6) in Segmente segmentiert (24);
- ein erster Teil der Segmente aus dem Paket wird dem Koprozessor (10) zugeführt (26);
- der Koprozessor (10) entschlüsselt (28) den ersten Teil der Segmente;
- der Host-Prozessor (6) entschlüsselt (30) den zweiten Teil der Segmente aus dem Paket; und
- es wird ein entschlüsseltes Datenpaket abgeliefert (32), das eine Kombination des entschlüsselten ersten und zweiten Teils umfaßt.

2. Verfahren nach Anspruch 1, bei dem ferner der Koprozessor (10) den entschlüsselten ersten Teil zu dem Host-Prozessor (6) sendet, und wobei der Schritt des Ablieferns umfaßt, den ersten und den zweiten Teil entschlüsselter Segmente unter der Kontrolle des Host-Prozessors (6) zu speichern (32).

3. Verfahren nach Anspruch 1, wobei der Schritt des Ablieferns umfaßt, den ersten Teil der entschlüsselten Segmente unter der Kontrolle des Koprozessors (10) zu speichern und den zweiten Teil der entschlüsselten Segmente unter der Kontrolle des Host-Prozessors (6) zu speichern.

4. Verfahren nach einem der Ansprüche 1 bis 3, wobei das entschlüsselte Datenpaket ein Muster enthält, das mehrere Typen von Daten in dem verschlüsselten Datenpaket identifiziert.

5. Verfahren nach Anspruch 4, wobei der Schritt des Segmentierens (24) des verschlüsselten Datenpakets umfaßt, das Muster zu analysieren, um die Segmente zu bilden.

6. Verfahren nach einem der Ansprüche 1 bis 5, wobei der Schritt, bei dem dem Koprozessor (10) der erste Teil der Segmente zugeführt wird, umfaßt, die Segmente gemäß einem bestimmten Kriterium auszuwählen, um den ersten Teil zu bilden.

7. Verfahren nach Anspruch 6, wobei die Segmente als Funktion ihrer Größe ausgewählt werden, wobei größere Segmente ausgewählt werden, um den ersten Teil zu bilden.

8. Verfahren nach Anspruch 6, wobei die Segmente als Funktion ihrer Position ausgewählt werden, wobei keine aufeinanderfolgenden Segmente ausgewählt werden, um den ersten Teil zu bilden.

9. Verfahren nach Anspruch 4 und 6 zusammengenommen, wobei die Segmente als Funktion der Typen von Daten in dem Segment ausgewählt werden, wobei Segmente, die keinen kritischen Typ von Daten enthalten, ausgewählt werden, um den ersten Teil zu bilden.

10. Entschlüsselungseinrichtung mit einem Host-Prozessor (6), wobei der Host-Prozessor (6) folgendes umfaßt:
- eine Schnittstelle mit mindestens einem Koprozessor (10),
- Mittel, die ein verschlüsseltes Datenpaket in Segmente segmentieren;
- Mittel, die einen ersten Teil der Segmente aus dem Paket dem Koprozessor (10) zuführen;
- Mittel, die den Koprozessor (10) steuern, um den ersten Teil der Segmente zu entschlüsseln; und
- Mittel, die einen zweiten Teil der Segmente aus dem Paket entschlüsseln.

11. Computerprogramm zur Ausführung durch einen Host-Prozessor einer Entschlüsselungseinrichtung, wobei das Computerprogramm Anweisungen aufweist, die bewirken, daß der Host-Prozessor die folgende Verarbeitung ausführt:
- ein verschlüsseltes Datenpaket wird segmentiert (24);
- ein erster Teil der Segmente aus dem Paket wird mindestens einem Koprozessor zugeführt (26);
- der Koprozessor wird gesteuert, um den ersten Teil der Segmente zu entschlüsseln (28); und
- ein zweiter Teil der Segmente aus dem Paket wird entschlüsselt (30).

## Revendications

1. Procédé de déchiffrage de données utilisant un processeur hôte (6) et au moins un coprocesseur (10) comprenant les étapes consistant à :
- fournir (20) au processeur hôte (6) un paquet de données cryptées (D) ;
- segmenter (24) ledit paquet de données cryptées en segments au moyen du processeur hôte (6) ;
- fournir (26) au coprocesseur (10) une première partie des segments provenant dudit paquet ;
- déchiffrer (28) ladite première partie des segments au moyen du coprocesseur (10) ;
- déchiffrer (30) une deuxième partie des segments provenant dudit paquet, au moyen du processeur hôte (6) ; et
- transmettre (32) un paquet de données cryptées comprenant une combinaison des première et deuxième parties déchiffrées.

2. Procédé selon la revendication 1, comprenant en outre une étape consistant à transmettre la première partie déchiffrée des segments au moyen du coprocesseur (10) au processeur hôte (6), et dans lequel l'étape de transmission comprend la mémorisation (32) des première et deuxième parties des segments déchiffrés sous le contrôle dudit processeur hôte (6).

3. Procédé selon la revendication 1, dans lequel l'étape de transmission comprend la mémorisation de ladite première partie des segments déchiffrés sous le contrôle dudit coprocesseur (10) et la mémorisation de ladite deuxième partie des segments déchiffrés sous le contrôle dudit processeur hôte (6).

4. Procédé selon l'une quelconque des revendications 1 à 3, dans lequel ledit paquet de données cryptées comprend un modèle identifiant plusieurs types de données au sein du paquet de données cryptées.

5. Procédé selon la revendication 4, dans lequel ladite étape de segmentation (24) du paquet de données cryptées comprend l'analyse dudit modèle pour former lesdits segments.

6. Procédé selon l'une quelconque des revendications 1 à 5, dans lequel ladite étape consistant à fournir (26) au coprocesseur (10) la première partie des segments comprend la sélection desdits segments pour former ladite première partie en fonction d'un critère déterminé.

7. Procédé selon la revendication 6, dans lequel lesdits segments sont sélectionnés en fonction de leur taille, les segments les plus gros étant sélectionnés pour former ladite première partie.

8. Procédé selon la revendication 6, dans lequel lesdits segments sont sélectionnés en fonction de leur position, aucun segment consécutif n'étant sélectionné pour former ladite première partie.

9. Procédé selon les deux revendications 4 et 6, dans lequel lesdits segments sont sélectionnés en fonction des types de données dans le segment, les segments ne contenant aucun type critique de données étant sélectionnés pour former ladite première partie.

10. Dispositif de déchiffrage comprenant un processeur hôte (6), dans lequel le processeur hôte (6) comprend :
- une interface avec au moins un coprocesseur (10) ;
- un moyen pour segmenter un paquet de données cryptées en segments ;
- un moyen pour fournir une première partie des segments provenant dudit paquet au coprocesseur (10) ;
- un moyen pour commander le coprocesseur (10) afin qu'il déchiffre ladite première partie des segments ; et
- un moyen pour déchiffrer une deuxième partie des segments provenant dudit paquet.

11. Programme informatique devant être exécuté par un processeur hôte d'un dispositif de déchiffrage, le programme informatique comprenant des instructions afin que ledit processeur hôte exécute les traitements suivants :
- la segmentation (24) d'un paquet de données cryptées en segments ;
- la fourniture (26) d'une première partie des segments provenant dudit paquet à au moins un coprocesseur ;
- la commande dudit coprocesseur pour déchiffrer (28) ladite première partie des segments ; et
- le déchiffrage (30) d'une deuxième partie des segments provenant dudit paquet.
